# EUROPÄISCHE PATENTSCHRIFT

(11) **EP 3 144 255 B1**
(45) Veröffentlichungstag und Bekanntmachung des Hinweises auf die Patenterteilung: **09.12.2020**
(21) Anmeldenummer: 16189817.6
(22) Anmeldetag: 21.09.2016
(51) Int. Cl.: B65G 47/90, B65G 59/02, B65G 61/00, B25J 15/00

(54) **VERWENDUNG EINER EINRICHTUNG ZUM UMPACKEN VON ZU PACKUNGSEINHEITEN ZUSAMMENGEFASSTEN STÜCKGÜTERN**
USE OF A DEVICE FOR PACKAGING PIECE GOODS COMBINED IN PACKAGING UNITS
UTILISATION D'UN DISPOSITIF DESTINE A RECONDITIONNER DES MARCHANDISES AU DETAIL REGROUPEES EN EMBALLAGES UNITAIRES

(30) Priorität: 21.09.2015 DE 102015115866
(43) Veröffentlichungstag der Anmeldung: 22.03.2017
(73) Patentinhaber: Schier, Alexander, 77654 Offenburg (DE)
(72) Erfinder:
(74) Vertreter: Kleine, Hubertus

(56) Entgegenhaltungen:
- WO-A1-2005/019072
- WO-A1-2012/069056
- WO-A1-2014/181285
- DE-A1- 19 959 285
- GB-A- 2 205 300
- JP-A- 2011 251 399
- JP-B2- 3 124 464
- US-A- 2 619 241
- US-A1- 2013 341 945
- US-B1- 9 089 969

## Beschreibung

Die Erfindung betrifft eine Verwendung einer Einrichtung zum Umpacken von zu Packungseinheiten zusammengefassten Stückgütern.

Derartige Stückgüter können in unterschiedlichen Formaten vorliegen. Beispielhaft seien hier Gebinde in Form von Flaschen oder quaderförmigen Behältnissen genannt, die in Umkartons, verschweißter Folie oder dergleichen zu Packungseinheiten zusammengefasst sind.

Eine Mehrzahl solcher Packungseinheiten sind zum Transport auf normierten Transportpaletten, im Folgenden Quellpaletten genannt, gestapelt, um sie beispielsweise von einem Hersteller der Stückgüter zu einer Verteilerstation zu transportieren.

Hier nun erfolgt ein Umpacken einzelner Packungseinheiten insbesondere auf kleinere Transportelemente, beispielsweise ebenfalls Paletten, sogenannte Zielpaletten, üblicherweise mit kleineren Grundrissabmaßen, um die Packungseinheiten beispielsweise kommissioniert an Warenhäuser oder dergleichen zu liefern.

Bislang erfolgt dieses Umpacken manuell, d.h., die jeweilige Packungseinheit wird von einer Bedienungsperson von der größeren Quellpalette auf eine kleinere Zielpalette gelegt, wobei hierzu die jeweilige Packungseinheit händisch ergriffen, angehoben und benachbart abgelegt wird.

Naturgemäß ist dies mit einer ganzen Reihe von zum Teil erheblichen Nachteilen verbunden. Zunächst einmal ist hierzu die körperliche Anstrengung zu nennen, die mit dem manuellen Umpacken verbunden ist und die zu starken gesundheitlichen Problemen führen kann. D.h., die die Arbeiten durchführende Person kann diese Tätigkeit nur über eine entsprechend kurze Zeitspanne ausüben, zumal die Packungseinheiten vielfach ein hohes Gewicht aufweisen, je nachdem welcher Art die Stückgüter sind.

Die erheblichen körperlichen Belastungen beim Umpacken von Packungseinheiten sind vorrangig als nachteilig zu nennen. Allerdings sind die bislang üblichen Umpackmöglichkeiten auch hinsichtlich ihrer Kostenstruktur als stark verbesserungswürdig anzusehen.

In der US 9 089 969 B1 ist eine Einrichtung zum Umpacken von Packungseinheiten offenbart, die zwei, an einem Basiselement befestigte, jeweils aus mehreren, gelenkig miteinander verbundenen Gliedern bestehende Greifarme aufweist, von denen jeder am freien Ende mit einem Greifelement versehen ist. Jedes dieser Greifelemente ist dazu gedacht, eine Packungseinheit umzupacken.

Der Erfindung liegt die Aufgabe zugrunde, eine Verwendung einer Einrichtung der gattungsgemäßen Art zu schaffen, mit der ein vereinfachtes Umpacken von Packungseinheiten möglich ist.

Diese Aufgabe wird durch eine Verwendung einer Einrichtung mit den Merkmalen des Anspruchs 1 gelöst.

Durch die Erfindung wird das bislang übliche manuelle Umpacken von Packungseinheiten maschinell durchgeführt, so dass die körperlichen Beschwernisse, wie sie bislang arbeitsbedingt eintraten, nun ausgeschlossen sind.

Neben der deutlich vereinfachten Handhabung beim Umpacken von Packungseinheiten sind auch die durch die erfindungsgemäße Verwendung möglichen verkürzten Umpackzeiten zu erwähnen, die zu einer deutlichen Kostenreduzierung des Umpackens beitragen.

Die Einrichtung weist ein um eine vertikale Achse schwenkbares Basiselement auf, das wiederum in vertikaler Richtung linear verfahrbar ist und an einem Kragarm oder Portal angeschlossen ist, mit dem das Basiselement und die daran angeschlossenen Arme in horizontaler Richtung linear bewegbar sind. Der Kragarm wiederum kann an einem Drehschemel befestigt und ebenfalls um eine vertikale Achse verschwenkbar sein.

Am Basiselement sind mindestens zwei der erwähnten Arme angeschlossen, die paarweise eine Funktionseinheit bilden, bestehend aus einem Greifarm und einem Hebearm.

Dabei weist jeder der Arme gelenkig miteinander verbundene Glieder auf, die gesteuert bewegbar sind, insbesondere jeweils um eine horizontale Achse.

Die Bewegung erfolgt mittels Aktuatoren, bevorzugt Elektromotoren, deren Bewegung rechnergesteuert erfolgt und zwar angepasst an die jeweilige Art und Größe der umzupackenden Packungseinheiten. Anstelle von Elektromotoren sind auch hydraulische oder pneumatische Antriebe denkbar.

Der Greifarm weist an seinem dem Basiselement gegenüberliegenden freien Ende, am sozusagen letzten Glied ein Greifelement auf, mit dem die umzupackende Packungseinheit angehoben wird, so dass ein Stützelement die Packungseinheit unterfahren kann, um diese von der Quellpalette zur Zielpalette zu bewegen.

Dieses Stützelement ist vergleichbar dem Greifelement am letzten, dem Basiselement abgewandten Glied des Hebearms angeordnet und zwar an dessen freiem Ende und bevorzugt um eine horizontale Achse schwenkbar, ebenfalls gesteuert.

Das Greifelement hingegen ist um zwei horizontale Achsen drehbar, wobei hierzu das Greifelement aus einer mit dem letzten Glied des Greifarmes, daran verdrehbar um eine horizontale Achse befestigten Halter sowie einer daran angelenkten Greifplatte besteht.

Die einzelnen Glieder sowie das Stützelement und das Greifelement, letzteres im Bereich der Anbindung an das Glied des Greifarmes, sind um gleichgerichtete Schwenkachsen drehbar, während die horizontal ausgerichtete Drehachse, mit der die Greifplatte am Halter angeschlossen ist, quer zur Ausrichtung der vorgenannten Drehachsen verläuft.

In Funktion wird zunächst das Greifelement an die Packungseinheit herangefahren und diese mit dem Greifelement so weit angehoben, dass das Stützelement mit seiner Stützplatte unter die Packungseinheit geschoben werden kann. In der Folge wird die auf der Stützplatte aufliegende Packungseinheit durch eine Schwenkbewegung der Stützplatte hin zu einer Zielpalette geführt, wo sie durch das Greifelement von der Stützplatte genommen und auf der Zielpalette oder als Stapelung auf bereits abgelegten Packungseinheiten abgestellt wird.

Erfindungsgemäß erfolgt die Schwenkbewegung des Stützelementes einerseits und des Greifelementes andererseits synchron, wobei während der Schwenkbewegung das Greifelement die Packungseinheit hält.

Um unterschiedlich konturierte Packungseinheiten greifen zu können, weist das Greifelement verschieden konzipierte Greifeinrichtungen auf, die je nach Anwendungsfall zum Einsatz kommen.

Neben der bereits genannten Greifplatte, die mit Saugelementen bestückt sein kann, um so eine quaderförmige, also mit planebenen Seitenflächen versehene Packungseinheit greifen zu können, kann das Greifelement eine Greifzange aufweisen, deren Zangenschenkel die entsprechende Packungseinheit einspannen. Der Einsatz der Greifzange bietet sich beispielsweise dann an, wenn die Packungseinheit mit einem Umkarton bestückt ist, der lediglich einen Boden und dazu abgekantete Seitenflächen geringer Höhe aufweist.

Wie erwähnt, sind auch Flaschen als Stückgüter zu Packungseinheiten zusammengefasst und mit einer Schrumpffolie umhüllt.

Dabei ist die Außenfläche der Packungseinheit aufgrund der Konturierung der Flaschen unregelmäßig strukturiert, d.h., es ist keine plane Fläche gebildet, wie sie für einen Quader typisch ist.

Um dennoch eine solche Packungseinheit umpacken zu können, weist das Greifelement eine Kippkante auf, mit der die Packungseinheit gegen die Stützplatte des Stützelementes kippbar ist, wobei die Stützplatte von einer vertikalen Stellung in eine horizontale Stellung verschwenkt wird, in der dann die Packungseinheit auf der Stützplatte aufliegt und weiter im Sinne eines Umpackens gefördert wird.

Um die Packungseinheit während des Umpackens gegen ein Rutschen auf der Stützplatte zu sichern, kann diese Reibelemente aufweisen, die pneumatisch oder hydraulisch herausfahr- bzw. absenkbar sind und so für den Transport eine Verschiebesicherung bilden, während nach einem Absenken eine Matrix als Gleitfläche dient, die ein leichteres Abschieben durch das Greifelement ermöglicht.

In diesem Sinne kann auch die Greifplatte ausgebildet sein, d.h. mit versenkbaren bzw. ausstellbaren Reibelementen, vorzugsweise in Form von Ronden.

Nach einem weiteren Gedanken der Erfindung ist die Einrichtung verfahrbar, insbesondere auf Schienen, so dass, entsprechend rechnergesteuert eine Kommissionierung der Packungseinheiten möglich ist.

Dabei kann die Einrichtung Bestandteil eines Portalsystems sein, das mit hintereinander liegenden Lagerflächen, beispielsweise in Form von Paletten und/oder mit Rollbahnen ausgestattet sein kann, auf denen die Packungseinheiten abgestellt oder von diesen abgenommen werden können.

Dabei ist die Einrichtung an einem verfahrbaren, schienengeführten Schlitten, quer zu dessen Verfahrrichtung, verfahrbar gehalten.

Die Einrichtung kann weiterhin Verwendung finden bei einem fahrerlosen Transportsystem, mit dem Packungseinheiten zu oder von einer bestimmten Lagerposition zu einer anderen verfahren werden, unter Zuhilfenahme der Einrichtung. Dabei kann dieses Transportsystem gleichfalls im Sinne eines Portals konzipiert sein oder aber an einem Kragarm befestigt, mit dem die Einrichtung sowohl in X- wie in Y-Richtung bewegbar ist, ebenso wie um eine vertikale Achse schwenkbar.

Weitere vorteilhafte Ausbildungen der Erfindung sind in den Unteransprüchen gekennzeichnet.

Ein Ausführungsbeispiel der Erfindung wird nachfolgend anhand der beigefügten Zeichnungen beschrieben.

Es zeigen:
- Figur 1: den Grundaufbau der Einrichtung in einer perspektivischen Ansicht
- Figuren 2 und 3: jeweils eine Einzelheit der Einrichtung, gleichfalls schaubildlich dargestellt
- Figuren 4-10: die Einrichtung in Funktionsstellungen zum Umpacken unterschiedlicher Packungseinheiten
- Figuren 11-14: die Verwendung einer Einrichtung an unterschiedlichen Bestückungsvorrichtungen, jeweils in einer perspektivischen Ansicht.

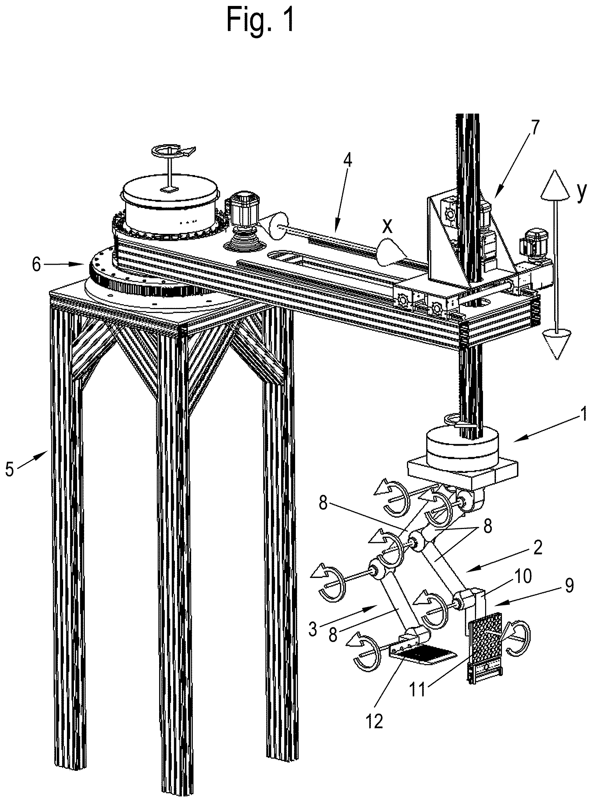

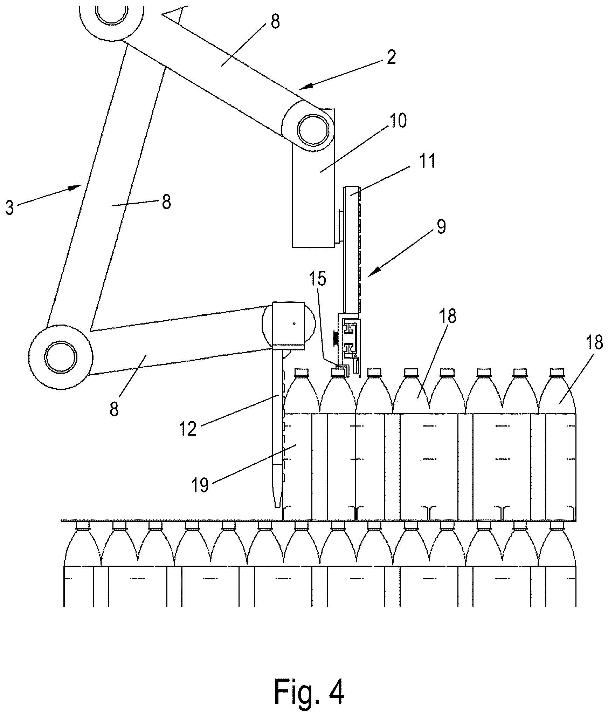

In der Figur 1 ist eine Einrichtung zum Umpacken von Packungseinheiten 19 (Figur 4) dargestellt, wobei die Packungseinheiten 19 aus zusammengefassten Stückgütern 18 bestehen.

Die Einrichtung umfasst ein um eine vertikale Achse schwenkbares Basiselement 1, an dem ein Greifarm 2 und ein Hebearm 3 angeschlossen sind.

Im Beispiel nach Figur 1 ist das Basiselement 1 in vertikaler Richtung Y linear verstellbar an einem Schlitten 7 gehalten, der wiederum in horizontaler Richtung X an einem Kragarm 4 verfahrbar positioniert ist.

Dieser Kragarm 4 ist an einem Drehschemel 6, vorzugsweise bis 360°, schwenkbar befestigt, der an einem Gestell 5 positioniert ist. Die Bewegungsrichtungen sind durch Pfeile gekennzeichnet.

Sowohl der Greifarm 2 wie auch der Hebearm 3 weisen jeweils mehrere gelenkig miteinander verbundene und gesteuert bewegbare Glieder 8 auf, wobei diese um horizontale Achsen verschwenkbar sind.

An dem dem Basiselement 1 abgewandten letzten Glied 8 des Greifarms 2 ist an dessen freiem Ende ein Greifelement 9 angeschlossen, bestehend aus einem Halter 10 sowie einer damit drehbar verbundenen Greifplatte 11. Wie die Pfeile am Greifelement 9 verdeutlichen, ist die Greifplatte 11 quer zur horizontalen Verschwenkung des Haltes 10 gleichfalls um eine horizontale Achse drehbar.

Der Hebearm 3 weist an seinem, dem Basiselement 1 abgewandten letzten Glied 8, gleichfalls an seinem freien Ende, eine Stützplatte 12 auf, die schwenkbar um eine horizontale Achse mit dem letzten Glied 8 des Hebearms 3 verbunden ist.

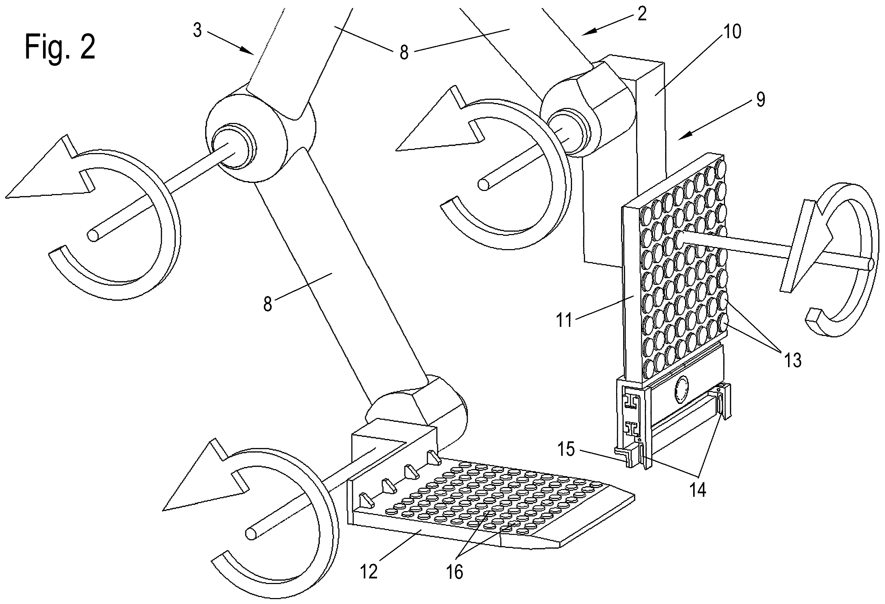

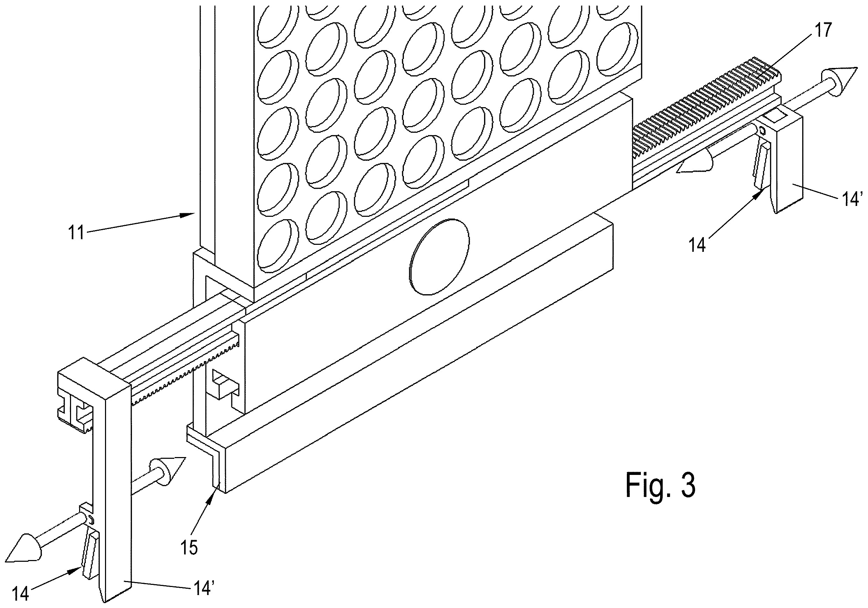

In den Figuren 2 und 3 ist ein vergrößerter Ausschnitt der Figur 1 abgebildet, wobei die Figur 3 einen Teilausschnitt des Greifelementes 9 wiedergibt.

Die Stützplatte 12 ist mit versenkbaren Reibelementen 16 versehen, die pneumatisch oder hydraulisch von einer Gebrauchsstellung, wie sie die Figur 2 wiedergibt, in eine Nichtgebrauchsstellung abgesenkt werden, so dass zum Transport die aufliegende Packungseinheit 19 während des Transportweges durch die Reibelemente 16 gehalten und nach deren Absenken von der Stützplatte 12 problemlos entnommen werden kann. Denkbar ist auch zur Halterung der Packungseinheit 19 in der Stützplatte 12 Saugelemente vorzusehen.

Die in den Figuren 2 und 3 erkennbare Greifplatte 11 ist sozusagen als Multifunktionsteil ausgebildet und mit Saugnäpfen 13 versehen, zum Ansaugen und Anheben der Packungseinheit 19. Denkbar ist auch anstelle der Saugnäpfe 13 versenkbare Reibelemente, vergleichbar denen der Stützplatte 12, anzuordnen.

Zur Multifunktion der Greifplatte 11 dient u.a. eine Greifzange mit Zangenschenkeln 14, die in der Abbildung in Figur 3 geöffnet erkennbar sind.

Dabei sind die Zangenschenkel 14, entsprechend der Pfeilangabe in Figur 3 über einen Zahntrieb 17 linear verschiebbar.

Weiter weist die Greifplatte 11 eine Kippkante 15 in Form eines Winkelprofils auf, dessen Funktion ebenso wie die der Greifzange nachfolgend beschrieben wird.

Die Figuren 4-6 geben einen Umpackvorgang von Packungseinheiten 19 wieder, die aus aus Flaschen bestehenden Stückgütern 18 zusammengefasst ist. Dabei sind diese Stückgüter 18 durch eine Schrumpffolie in einer Packungseinheit 19 gehalten.

In der Figur 4 ist die Ausgangsposition wiedergegeben, in der die Packungseinheiten 19 auf einer Quellpalette gestapelt sind.

Zum Umpacken einer Packungseinheit 19 wird die Greifplatte 11 über eine Endreihe der Stückgüter 18 verfahren, bis die Kippkante 15 zur kopfseitigen Anlage an der Endreihe kommt. Gleichzeitig liegt die Stützplatte 12 außenseitig an der Packungseinheit 19 an.

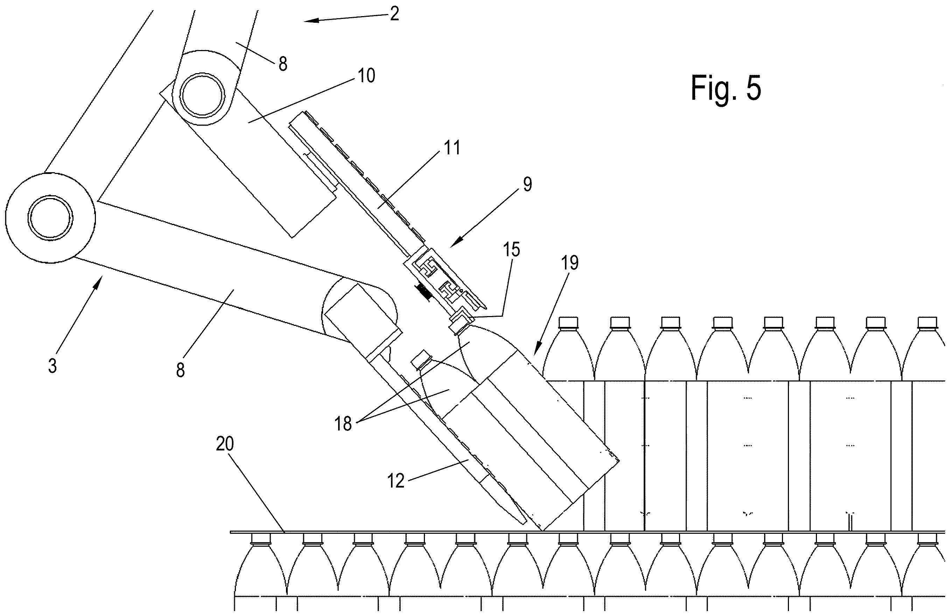

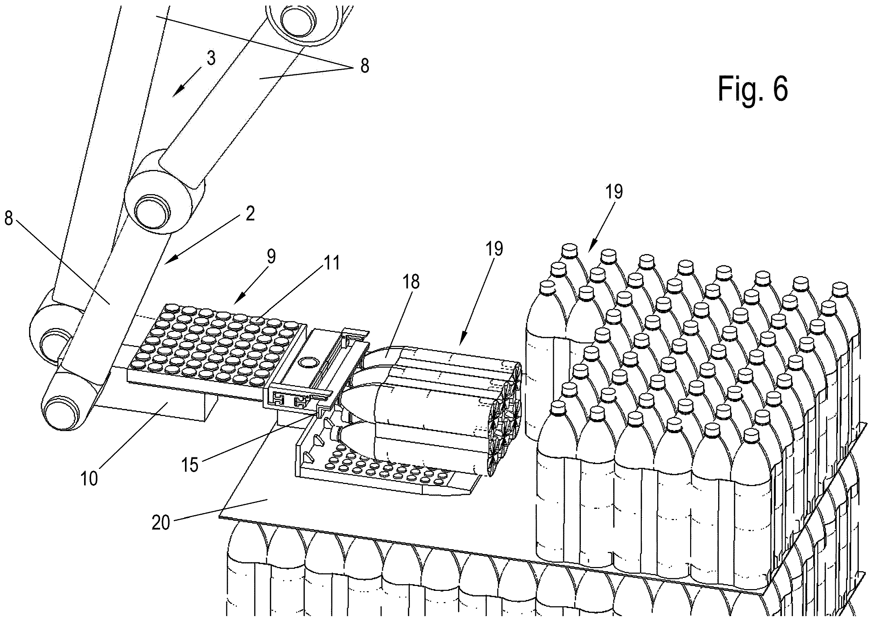

In der Figur 5 ist dargestellt, dass im Folgenden sowohl die Greifplatte 11 wie auch die Stützplatte 12 derart verschwenkt werden, dass die Packungseinheit 19 in Richtung der Stützplatte 12 kippt. Im weiteren Verlauf, wie in der Figur 6 erkennbar, werden die Stützplatte 12 und die Greifplatte 11 in eine horizontale Ebene verschwenkt und in dieser Stellung zu einer Zielpalette verfahren, wo die Packungseinheit 19 im umgekehrten Bewegungsablauf abgesetzt wird.

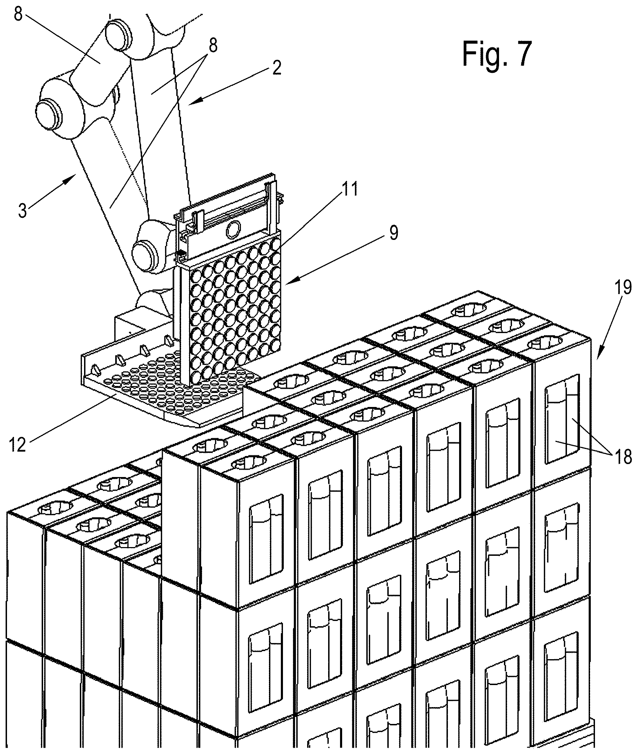

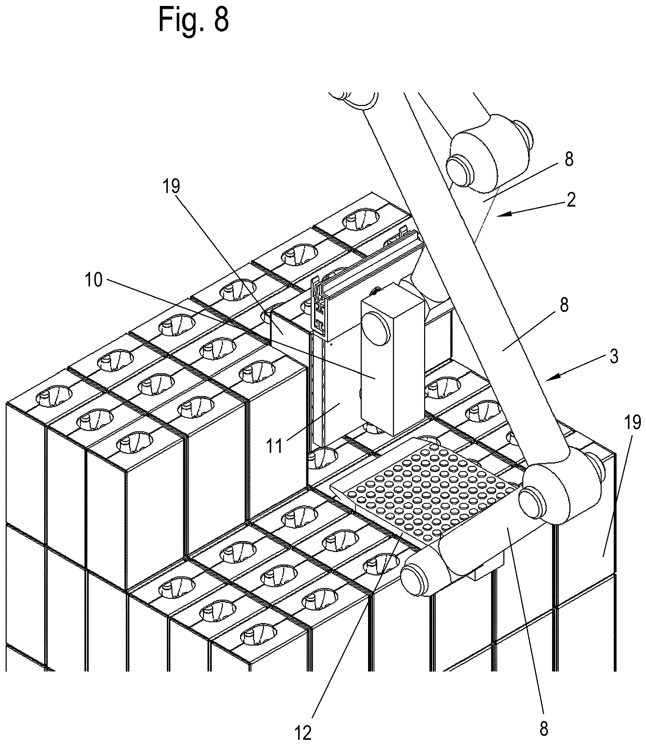

In den Figuren 7 und 8 ist die Funktion der Einrichtung bei einem Umpacken von quaderförmigen Packungseinheiten 19 dargestellt.

In der Figur 7 ist die Greifplatte 11 des Greifelementes 9 vor einem Kontaktieren mit einer umzusetzenden Packungseinheit 19 zu erkennen, während die Stützplatte 12 unterhalb der Greifplatte 11 angeordnet ist und in dieser Position zunächst verharrt.

Im weiteren Verlauf, entsprechend der Figur 8, kommt die Greifplatte 11 an einer Außenfläche der Packungseinheit 19 zur Anlage, wo sie mittels der Saugnäpfe ergriffen und angehoben wird und zwar so weit, dass die Stützplatte 12 unterfahren kann.

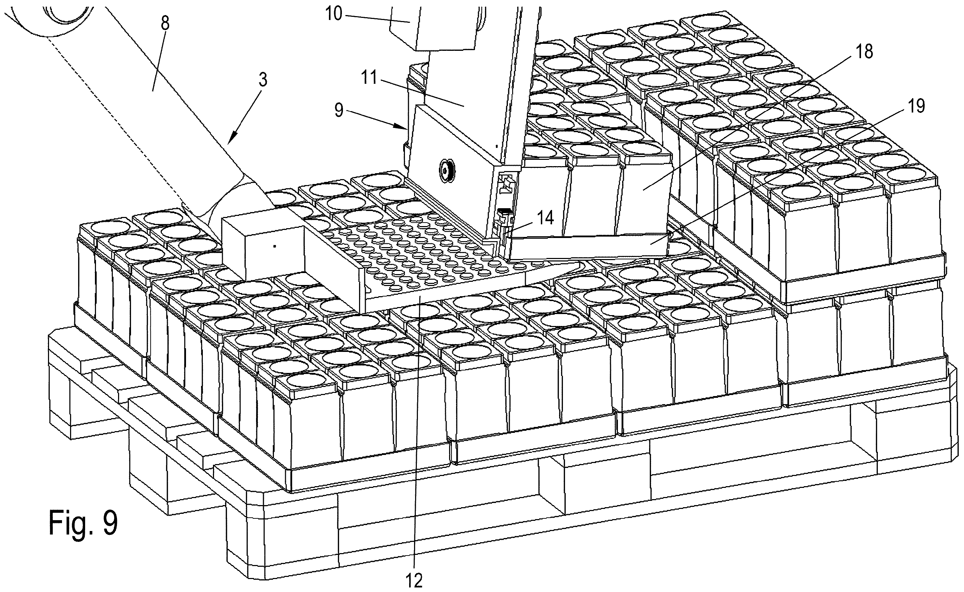

Die Figur 9 veranschaulicht den Beginn eines Umpackvorgangs einer Packungseinheit 19, bei der die Stückgüter 18 lediglich in einem als Aufnahmerahmen gebildeten Umkarton positioniert sind, der einen geschlossenen Boden aufweist, auf dem die Stückgüter 18 aufstehen und einen dazu abgewinkelten umlaufenden relativ niedrigen Rahmen, während die Stückgüter 18 im Übrigen unbedeckt sind, also frei stehen.

Zum Anheben der Packungseinheit 19 werden die geöffneten Zangenschenkel 14 mit einem Anlageschenkel 14' (Figur 3) zwischen die zugeordnete Reihe der Stückgüter 18 und den Rahmen des Umkartons geschoben und die Zangenschenkel 14 geschlossen. Danach kann die Packungseinheit 19 einseitig angehoben und die Stützplatte 12 untergeschoben werden, bis die Packungseinheit 19 vollständig aufliegt.

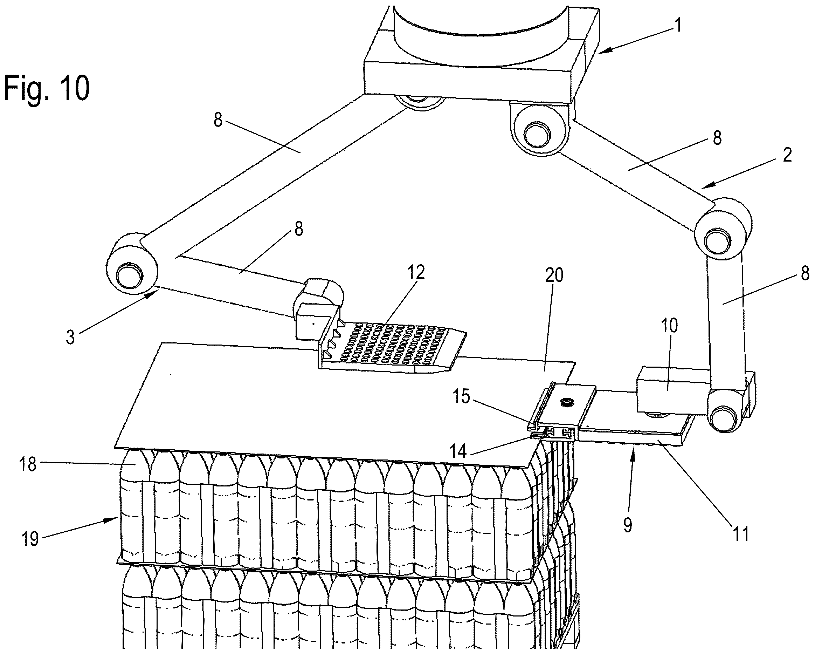

In der Figur 10 schließlich ist zu erkennen, dass mit der Greifplatte 11 bzw. mit der Greifzange eine Zwischenlage 20 gleichfalls umgesetzt werden kann.

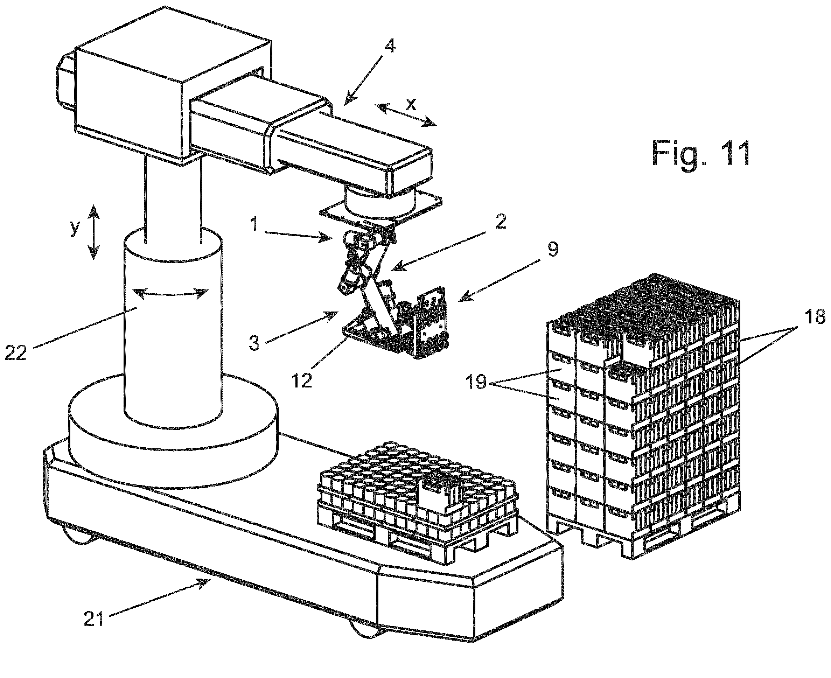

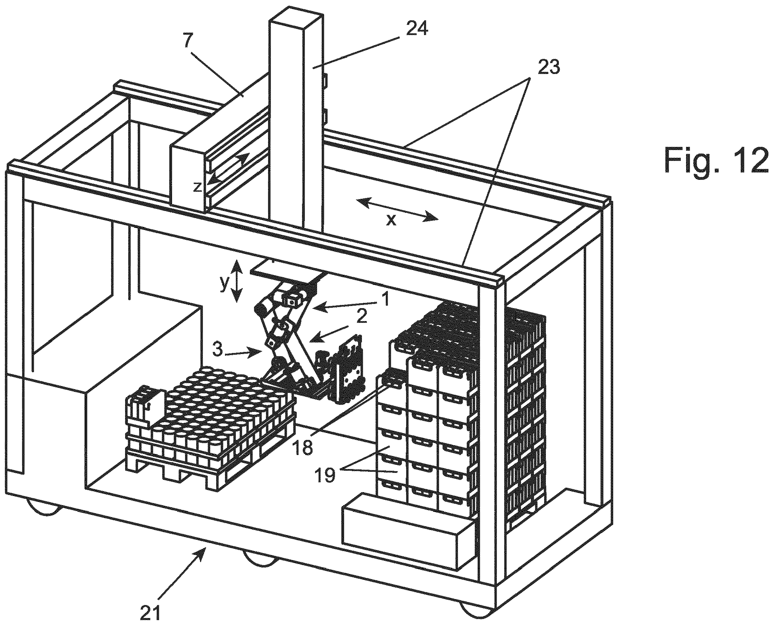

Die Figuren 11 und 12 zeigen den Einsatz der Einrichtung an einem fahrerlosen Transportsystem. Hierzu weist das jeweilige Transportsystem ein mit Rollen bestücktes Fahrgestell 21 auf, das insbesondere ferngesteuert bewegbar ist.

Dieses Fahrgestell 21 trägt bei dem in der Figur 11 gezeigten Beispiel eine entsprechend der Pfeilangabe verdrehbare vertikale Schwenkachse 22, an deren dem Fahrgestell 21 abgewandten Ende der Kragarm 4, im Beispiel als Teleskoparm ausgebildet, gehalten ist, so dass die Einrichtung in X- und Y-Richtung gegenüber dem Fahrgestell 21 verfahrbar ist, ebenso verschwenkbar.

Ein prinzipiell vergleichbares Transportsystem ist in der Figur 12 wiedergegeben, das als Portalsystem einen mit Abstand zum Fahrgestellt 21 positionierten Schlitten 7 aufweist, der auf parallel und abständig zueinander angeordneten Schienen 23 in X-Richtung verfahrbar geführt ist und der einen in Y-Richtung verfahrbaren Vertikalträger 24 trägt, an dem die Einrichtung angehängt ist.

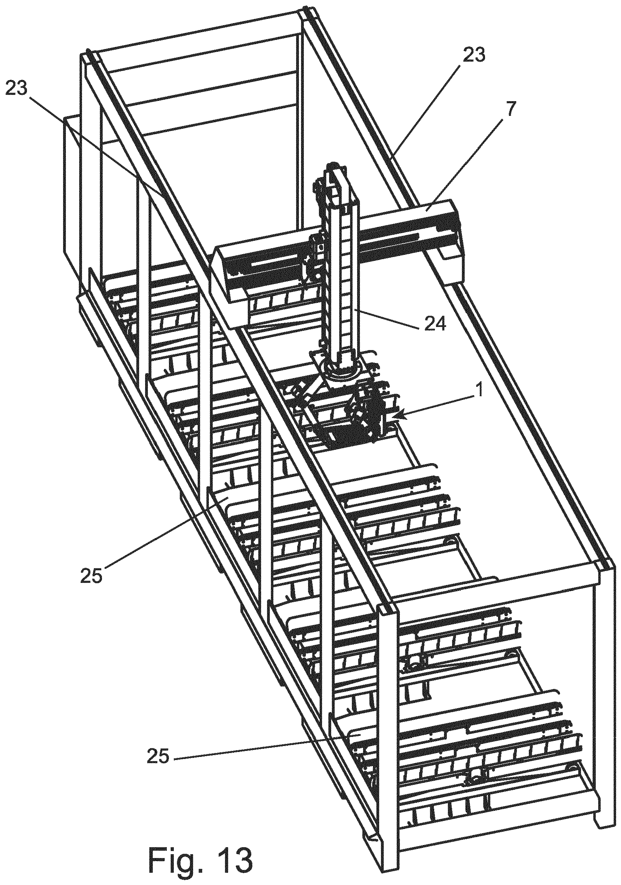

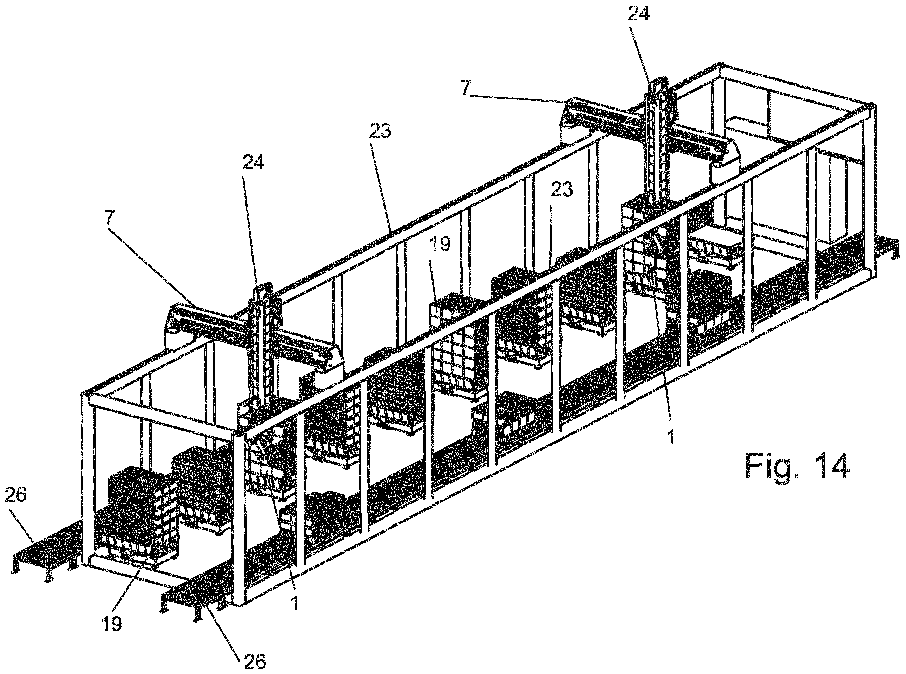

Ein Portalsystem, das konzeptionell der Ausführung in Figur 12 entspricht, jedoch stationär angeordnet ist, also ohne ein Fahrgestell 21, ist in den Figuren 13 und 14 gezeigt.

Während das Portalsystem nach der Figur 13 mit einem Schlitten 7 bestückt ist, überdies noch quer zur schienengeführten Längsrichtung des Schlittens 7 verlaufende, parallel und abständig zueinander angeordnete Förderbahnen 25 aufweist, ist das Portalsystem nach der Figur 14 mit zwei Schlitten 7 ausgestattet, wobei hier in Verschieberichtung der Schlitten 7 verlaufende Rollbahnen 26 vorgesehen sind, von denen eine im Zugriffsbereich der Einrichtung und die andere außerhalb davon angeordnet ist. Beide Schlitten 7 sind mit einer Einrichtung nach Anspruch 1 versehen und gemeinsam oder getrennt steuerbar.

## Patentansprüche

1. Verwendung einer Einrichtung zum Umpacken von zu Packungseinheiten (19) zusammengefassten Stückgütern (18),
- wobei die Einrichtung ein um eine vertikale Achse schwenkbares Basiselement (1) aufweist,
- an dem mindestens ein Greifarm (2) und mindestens ein Hebearm (3) angeschlossen sind, die paarweise eine Funktionseinheit bilden und die jeweils mehrere, gelenkig miteinander verbundene und gesteuert um eine horizontale Achse schwenkbar bewegbare Glieder (8) aufweisen,
- wobei am freien Ende des Greifarmes (2) ein Greifelement (9) und am freien Ende des Hebearms (3) ein als Stützplatte ausgebildetes Stützelement (12) angeordnet sind,
- wobei das Basiselement (1) in vertikaler Richtung linear verfahrbar und an einem Kragarm (4) oder Portal angeschlossen ist, mit dem das Basiselement (1) und die daran angeschlossenen Arme in horizontaler Richtung linear bewegbar sind,
- wobei die Bewegung mittels Aktuatoren erfolgt, deren Bewegung rechnergesteuert erfolgt, angepasst an die jeweilige Art und Größe der umzupackenden Packungseinheiten (19),
- wobei mit dem Greifelement (9) die umzupackende Packungseinheit (19) angehoben wird, so dass das Stützelement (12) die Packungseinheit (19) unterfahren kann, um diese von einer Quellpalette zu einer Zielpalette zu bewegen,
- wobei das Greifelement (9) einen an dem zugeordneten Glied (8) schwenkbar befestigten Halter (10) und eine daran um eine horizontale Achse drehbare Greifplatte (11) aufweist,
- wobei die einzelnen Glieder (8) sowie das Stützelement (12) und das Greifelement (9), letzteres im Bereich der Anbindung an das Glied des Greifarmes (2), um gleichgerichtete Schwenkachsen drehbar sind, während die horizontal ausgerichtete Drehachse, mit der die Greifplatte (11) am Halter (10) angeschlossen ist, quer zur Ausrichtung der vorgenannten Drehachsen verläuft,
- wobei in Funktion zunächst das Greifelement (9) an die Packungseinheit (19) herangefahren und diese mit dem Greifelement (9) so weit angehoben wird, dass das Stützelement (12) unter die Packungseinheit (19) geschoben werden kann,
- wobei in der Folge die auf der Stützplatte aufliegende Packungseinheit (19) durch eine Schwenkbewegung der Stützplatte hin zu einer Zielpalette geführt, wo sie durch das Greifelement (9) von der Stützplatte genommen und auf der Zielpalette oder als Stapelung auf bereits abgelegten Packungseinheiten (19) abgestellt wird,
- wobei die Schwenkbewegung des Stützelementes (12) und des Greifelementes (9) synchron erfolgt,
- wobei während der Schwenkbewegung das Greifelement (9) die Packungseinheit (19) hält.

2. Verwendung nach Anspruch 1, **dadurch gekennzeichnet, dass** die Greifplatte (11) mit Saugnäpfen oder versenkbaren Reibelementen (16) versehen ist.

3. Verwendung nach einem der vorhergehenden Ansprüche, **dadurch gekennzeichnet, dass** die Greifplatte (11) eine Kippkante (15) aufweist.

4. Verwendung nach einem der vorhergehenden Ansprüche, **dadurch gekennzeichnet, dass** die Greifplatte (11) eine Greifzange aufweist, mit linear verschiebbaren Zangenschenkeln (14).

5. Verwendung nach einem der vorhergehenden Ansprüche, **dadurch gekennzeichnet, dass** die Stützplatte (12) mit versenkbaren Reibelementen (16) versehen ist.

6. Verwendung nach einem der vorhergehenden Ansprüche, **dadurch gekennzeichnet, dass** die Stützplatte (12) um eine horizontale Achse verschwenkbar am freien Ende des letzten Gliedes (8) des Hebearmes (3) angeschlossen ist.

7. Verwendung nach einem der vorhergehenden Ansprüche, **dadurch gekennzeichnet, dass** die Glieder (8) elektrisch, pneumatisch oder hydraulisch verschwenkbar sind.

8. Verwendung nach einem der vorhergehenden Ansprüche, wobei die Einrichtung an mindestens einem Schlitten (7) eines Portalsystems gehalten ist.

9. Verwendung nach einem der vorhergehenden Ansprüche, wobei die Einrichtung an einem selbstfahrenden Portalsystem oder einer Transporteinrichtung angeordnet ist.

10. Verwendung nach Anspruch 9, wobei die Einrichtung an einem vorzugsweise teleskopierbaren Kragarm (4) in X- und in Y-Richtung sowie verschwenkbar gehalten ist.

## Claims

1. Use of a device for repackaging piece goods (18) combined into packaging units (19),
- wherein the device comprises a base element (1) pivotable about a vertical axis,
- to which at least one gripping arm (2) and at least one lifting arm (3) are connected, which form a functional unit in pairs and which each have a plurality of members (8) which are connected to one another in an articulated manner and can pivot in a controlled manner about a horizontal axis,
- wherein a gripping element (9) is arranged at the free end of the gripping arm (2) and a support element (12) in the form of a support plate is arranged at the free end of the lifting arm (3),
- wherein the base element (1) is linearly movable in the vertical direction and is connected to a cantilever arm (4) or portal, with which the base element (1) and the arms connected thereto are linearly movable in the horizontal direction,
- wherein the movement is effected by means of actuators, the movement of which is computer-controlled, adapted to the respective type and size of the packaging units (19) to be repackaged,
- wherein the packaging unit (19) to be repacked is lifted with the gripping element (9) so that the support element (12) can pass under the packaging unit (19) in order to move it from a source pallet to a target pallet,
- wherein the gripping element (9) comprises a holder (10) pivotally attached to the associated member (8) and a gripping plate (11) rotatable thereon about a horizontal axis,
- wherein the individual members (8) as well as the support element (12) and the gripping element (9), the latter in the region of the connection to the member of the gripping arm (2), are rotatable about pivot axes aligned in the same direction, while the horizontally oriented rotational axis, with which the gripping plate (11) is connected to the holder (10), extends transversely to the orientation of the aforementioned rotational axes,
- wherein, in operation, the gripping element (9) is first moved up to the packaging unit (19) and the latter is raised with the gripping element (9) to such an extent that the support element (12) can be pushed under the packaging unit (19),
- wherein the packaging unit (19) resting on the support plate is subsequently guided by a pivoting movement of the support plate towards a target pallet, where it is removed from the support plate by the gripping element (9) and deposited on the target pallet or as a stack on already deposited packaging units (19),
- wherein the pivoting movement of the support element (12) and the gripping element (9) is synchronous,
- wherein during the pivoting movement the gripping element (9) holds the packaging unit (19).

2. Use according to claim 1, **characterized in that** the gripping plate (11) is provided with suction cups or retractable friction elements (16).

3. Use according to one of the preceding claims, **characterized in that** the gripping plate (11) has a tilting edge (15).

4. Use according to one of the preceding claims, **characterized in that** the gripping plate (11) has gripping pliers with linearly displaceable pincer arms (14).

5. Use according to one of the preceding claims, **characterized in that** the support plate (12) is provided with retractable friction elements (16).

6. Use according to one of the preceding claims, **characterized in that** the support plate (12) is connected to the free end of the last member (8) of the lifting arm (3) so as to be pivotable about a horizontal axis.

7. Use according to one of the preceding claims, **characterized in that** the members (8) are electrically, pneumatically or hydraulically pivotable.

8. Use according to one of the preceding claims, wherein the device is held on at least one slide (7) of a portal system.

9. Use according to one of the preceding claims, wherein the device is arranged on a self-propelled portal system or a transport device.

10. Use according to claim 9, wherein the device is held on a preferably telescopic cantilever arm (4) in the X- and Y-direction as well as pivotably.

## Revendications

1. Utilisation d'une installation pour transborder des marchandises de détail (18) regroupées en unités d'emballage (19),
- dans laquelle l'installation présente un élément de base (1) qui peut pivoter autour d'un axe vertical,
- auquel sont raccordés au moins un bras de préhension (2) et au moins un bras de levage (3) qui forment une unité fonctionnelle par paire et qui présentent chacun plusieurs segments (8) articulés entre eux et capables de pivoter de façon contrôlée autour d'un axe horizontal,
- dans laquelle un élément de préhension (9) est disposé à l'extrémité libre du bras de préhension (2) et un élément d'appui (12) conformé comme une plaque d'appui à l'extrémité libre du bras de levage (3),
- dans laquelle l'élément de base (1) est capable de déplacement linéaire dans le sens vertical et est raccordé à un bras en porte-à-faux (4) ou à un portique avec lequel l'élément de base (1) et les bras qui lui sont raccordés peuvent être déplacés de façon linéaire dans le sens horizontal,
- dans laquelle le mouvement est réalisé au moyen d'actionneurs dont le mouvement est contrôlé par un ordinateur et adapté à la nature et à la taille des unités d'emballage (19) à transborder,
- dans laquelle l'unité d'emballage (19) à transborder est soulevée par l'élément de préhension (9) de telle manière que l'élément d'appui (12) puisse passer sous l'unité d'emballage (19) pour déplacer celle-ci d'une palette d'origine à une palette de destination,
- dans laquelle l'élément de préhension (9) présente une monture (10) fixée de façon pivotante sur le segment (8) correspondant et une plaque de préhension (11) qui peut tourner sur celle-ci autour d'un axe horizontal,
- dans laquelle les différents segments (8) et l'élément d'appui (12) et l'élément de préhension (9), ce dernier au niveau de la liaison avec le segment du bras de préhension (2), sont capables de rotation autour d'axes de pivotement orientés dans la même direction, tandis que l'axe de rotation horizontal avec lequel la plaque de préhension (11) est raccordée à la monture (10) est orienté perpendiculairement à l'orientation desdits axes de rotation,
- dans laquelle, en fonctionnement, l'élément de préhension (9) est d'abord amené vers l'unité d'emballage (19) et celle-ci est soulevée avec l'élément de préhension (9) jusqu'à ce que l'élément d'appui (12) puisse être inséré sous l'unité d'emballage (19),
- dans laquelle l'unité d'emballage (19) reposant sur la plaque d'appui est ensuite amenée, par un mouvement pivotant de la plaque d'appui, vers une palette de destination où elle est retirée de la plaque d'appui par l'élément de préhension (9) et posée sur la palette de destination ou empilée par-dessus des unités d'emballage (19) déjà déposées,
- dans laquelle le mouvement pivotant de l'élément d'appui (12) et de l'élément de préhension (9) est synchrone,
- dans laquelle, pendant le mouvement pivotant, l'élément de préhension (9) retient l'unité d'emballage (19).

2. Utilisation selon la revendication 1, **caractérisée en ce que** la plaque de préhension (11) est munie de ventouses ou d'éléments à friction (16) pouvant être abaissés.

3. Utilisation selon l'une des revendications précédentes, **caractérisée en ce que** la plaque de préhension (11) présente un bord de basculement (15).

4. Utilisation selon l'une des revendications précédentes, **caractérisée en ce que** la plaque de préhension (11) présente une pince de préhension avec des bras de pince (14) capables de translation linéaire.

5. Utilisation selon l'une des revendications précédentes, **caractérisée en ce que** la plaque d'appui (12) est munie d'éléments à friction (16) pouvant être abaissés.

6. Utilisation selon l'une des revendications précédentes, **caractérisée en ce que** la plaque d'appui (12) est raccordée de façon pivotante autour d'un axe horizontal à l'extrémité libre du dernier segment (8) du bras de levage (3).

7. Utilisation selon l'une des revendications précédentes, **caractérisée en ce que** les segments (8) peuvent pivoter de façon électrique, pneumatique ou hydraulique.

8. Utilisation selon l'une des revendications précédentes, dans laquelle l'installation est retenue sur au moins un chariot (7) d'un système de portique.

9. Utilisation selon l'une des revendications précédentes, dans laquelle l'installation est disposée sur un système de portique automoteur ou une installation de transport.

10. Utilisation selon la revendication 9, dans lequel l'installation est retenue de façon pivotante sur l'axe X et l'axe Y sur un bras en porte-à-faux (4) de préférence télescopique.
